# EUROPEAN PATENT SPECIFICATION

(11) **EP 3 067 278 B1**
(45) Date of publication and mention of the grant of the patent: **19.06.2019**
(21) Application number: 15382113.7
(22) Date of filing: 13.03.2015
(51) Int. Cl.: B64G 1/22, B64G 1/66, H01Q 15/16

(54) **Network of a deployable structure, and mold and procedure for obtaining said network**
Ntzwerk für eine entfaltbare Struktur, und Form und Verfahren zum Herstellen dieses Netzwerks
Réseau pour une structure déployable, et moule et procédé pour obtenir ledit réseau

(43) Date of publication of application: 14.09.2016
(73) Proprietor: Ingenieria Prosix S.L., 20011 Donostia (Guipúzcoa) (ES)
(72) Inventor: Pipo Benito, Alvaro, 20011 Donostia, (GIPUZKOA) (ES)
(74) Representative: Pons

(56) References cited:
- WO-A1-2012/065619
- US-A- 5 680 145
- US-A1- 2012 044 125
- US-B1- 6 266 030

## Description

### OBJECT OF THE INVENTION

The present invention belongs to the field of deployable structures, in particular deployable structures of antennas for aerospace application.

The invention relates to a production process of a network for said deployable structure, which has the purpose giving stability and rigidity to the structure, whilst the network has an optimum configuration, to be deployed and folded together and uniformly with the structure in conditions of weightlessness or gravity with a uniform distribution of stresses.

The surface created by the network constitutes the base, for example, for a metallized mesh or collapsible membrane with different end uses of the structure, such as, for example, a communication antennal, a surface of optical type, a reflector, or the protector of a telescope, among other possible additions.

Likewise, the invention relates to the actual network and the mould used to obtain the network.

### BACKGROUND OF THE INVENTION

The use of large antennas for satellite communication networks is increasingly widespread, with said antennas fundamentally incorporating a structure which must be disposed in compact and folded form in a spacecraft for its launching and transport, as well as, on the other hand, having the necessary rigidity, once deployed, to guarantee its stability during its operating life.

Patent application WO2012065619 relates to a deployable support structure, which is of special interest in space applications, which shows a polyhedral configuration with several facets, wherein each facet is formed by six arms, where each arm is joined to another two by their ends, with the intermediation of a revolute joint to form a closed loop, wherein the structure can be converted from a deployed state to a folding state and vice-versa.

In the deployed state, the six-arm structure forms a trapezium with first and second sides, parallel and opposite, joined by side arms, wherein each first and second side is formed by two arms or struts, which pivot around a corresponding first or second revolute joint.

In the folded state, the two struts of the first side are folded around a first revolute joint, so that the ends of the struts are opposite, and the two struts of the second side are folded around a second revolute joint, so that the ends are facing one another.

This six-arm facet constitutes the base element that combines with other facets forming a cell or modular structure.

This application also cites the incorporation of synchronization means that allow a synchronized and controlled movement of the adjacent facets during the folding or deployment movement of the structure; however, it is not shown how said means work and how they would act on the arms of the structure.

In particular, it is considered that the deployment operation in conditions of weightlessness is critical, as the same deployment force must be exerted on each pair of arms that pivot around one another to guarantee a correct deployment of the structure.

Likewise, the structure must incorporate means which guarantee its stability and rigidity when it is totally deployed, for which reason an additional element is required which determines the creation of a uniform tensional state throughout the structure once deployed, and this element must be capable of being folded and deployed together with the structure, favouring the uniform deployment operation of the structure and providing the functionality to the structure in its applications, for example, for an antenna, reflector or solar concentrator.

Furthermore document US5 680 145 discloses a deployable structural network, comprising:
- a first framework of tapes formed by interwoven tapes and by guide and fastening elements which, on the one hand, grip the tapes in their intersection points and, on the other, define supports,
- a second framework of tapes formed by interwoven tapes and by guide and fastening elements which, on the one hand, join the tapes (5) in their intersection points and, on the other, define supports,
- straps which couple by one end with the supports of the guide and fastening elements which grip the tapes of the first framework of tapes and which couple by their other end with the supports of the guide and fastening elements which grip the tapes of the second framework of tapes,
- lower joining elements which are designed to connect the tapes of the second framework of tapes to the lower nodes of the deployable structure, and
- upper joining elements which are designed to connect the tapes of the first framework of tapes to the upper nodes of the deployable structure.

### DESCRIPTION OF THE INVENTION

The present invention relates to a combination of a deployable structural network and a deployable structure according to claim 1.

The network and deployable structure constitute the structural base for the creation of a working surface with paraboloid geometry or any required for the final objective of the structure. Coupling to the surface created by the network of the present invention a metallized mesh or collapsible membrane of any type, different end uses of the structure shall be obtained, such as, for example, a communication antenna, a surface of optical type, a reflector, or the protector of a telescope, among other possible applications.

The deployable structure whereon the network is going to be coupled is a structure configured by struts and articulated arms joined to the struts by nodes.

The network is fundamentally constituted by different frameworks of interwoven tapes, straps that connect both frameworks of tapes and joining elements that are going to constitute the places of anchoring and tension of the frameworks of tapes on the nodes of the deployable structure. Preferably the two frameworks of tapes face one another in different planes, are not interwoven and have an essentially paraboloid configuration, wherein a framework of tapes has an orientation facing the other framework of tapes and wherein its central vertices constitute the closest points between frameworks of tapes.

The tapes are of carbon fibre material, totally or partially impregnated by flexible epoxy resin and optionally are additionally composed of a lubricating film on their surface, said tapes being devised so that they do not have elongation but they can be folded. This material and the particular disposal of the tapes in the network shall avoid tangling from occurring during the folding or unfolding of the network.

The production process of the network not being part of the present invention is described below:
In first place, a mould is manufactured in stable and resistant material, metal or in any other material, which is formed by a frame of plates preferably parallel and perpendicular, whereto plates are added in oblique disposal, wherein each one of the plates has an upper perimeter edge or whereon the tapes can be adapted. The configuration and distribution of the plates, and in particular their upper edges, can be performed in accordance with the geometry one aims to give the surface resulting from the tape framework.

Having obtained the mould, the tapes are then distributed in a specific point, partially or totally on said edges of the plates, adapting to the gradient and/or curvature of some edges, so that the tapes interweave defining a relative distribution and orientation between tapes that are going to configure the framework.

Once the tapes are positioned on the edges of the plates, they are individually fixed and tightened using tension regulating instruments and joining elements to anchoring elements that are distributed in the required positions on the mould, with the tapes being adapted on the mould, interwoven and subjected to controlled tension configuring a framework of tapes with several intersection points.

The points of the mould where the anchoring elements are positioned may correspond to the anchoring points or joining elements of said network to the deployable structure at the time of the assembly which shall be explained below. The joining elements fixed close to the ends of the tapes shall allow the assembling and final tightening (tuning) of the network to the deployable structure.

The joining elements comprise, in their simplest configuration, a fixed body provided with a screw designed to be fixed to the node of the structure and a strip which can be coupled against the fixed body by means of adjustment screws, both being configured so that the tape is trapped between the strip and the fixed body.

Preferably, the resulting framework has in plan a geometry formed by two crossed equilateral triangles of opposite orientations with the intermediation of three diametric lines and a circular line.

On the other hand, it has been provided that on the edges of the plates of the mould are located inserts situated in positions which are going to correspond with the intersection points between the tapes, equipped with an upper face of contact where guide and fastening elements are disposed whose function is to establish the joint between the tapes in their intersection points and to define a support and guide designed to receive the end of straps in another later phase which shall be detailed below.

The guide and fastening elements comprise a core wherefrom radially emerge several legs, where the core of the guide and fastening element preferably has a through bore, and each mould insert has in its upper face a housing designed to house a pin, which shall in turn penetrate through the core of the guide and fastening element to thus fix its position.

On the other hand, the pin may be sensorised and is preferably fixed to the bore of the guide and fastening element by mechanical adjustment, in this way remaining joined together at least temporarily.

Part of the legs of the core of the guide and fastening element are folding and are designed to crimp the tapes so that they cross in the intersection points and the rest of the legs may be folded in their upper part to form said support/guide designed to receive the strap.

With the guide and fastening elements positioned on the inserts of the mould, the legs are therefore folded by crimping the tapes in their intersection points, thus establishing the position and distribution of relative tension between tapes, and defining the intersection points wherein the guide and fastening elements are located.

In this way, a first framework of tapes is obtained which is then released with respect to the mould loosening the anchoring elements which kept the tapes in tension on the mould. The first framework is reserved and then the second framework is formed similar to the first.

This second framework is formed following the same method described above, using other tapes of the same characteristics, which are positioned interwoven in the same way on the mould and which are connected by the grips thus establishing the relative position and distribution between tapes configuring the second framework of tapes. As variant of the method followed to form the first network, in this case, the anchoring elements may not be used to position and tighten the tapes; instead, the tapes can be directly connected to the support structure in their extended position by the aforementioned joining elements.

The mould may additionally house positioning/alignment or anchoring systems for the correct positioning of the support structure in its extended position.

The structure whereon the network is going to be assembled has struts positioned in preferably trunk-conical distribution, which are interconnected by their upper and lower ends by the articulated arms, the nodes being defined in the joint between struts and arms, whereon the joining elements of the network, which are going to constitute the anchoring and tightening places of the first and second frameworks of tapes of the network on the structure, will be coupled. It distinguishes between the upper joining elements, those that couple in the upper nodes of the structure, and the lower joining elements, those that couple in the lower nodes of the structure.

The deployable structure is mounted on the mould, connecting the structure's struts to the positioning/alignment or anchoring systems of the mould if necessary. This operation is not necessary if the alternative process described above has been followed to perform the second framework.

In this situation, the joining elements of the tapes of the second framework are then connected on the lower nodes of the structure. The tapes of the second framework are thus fastened to the structure, subjected to tension by their ends by the joining elements, tension which must preferably coincide in all tapes.

Once the tapes of the second structure have been associated to the structure, the straps are mounted on the guide and fastening elements which are in the intersection points of the tapes, coupling one of the ends of the straps, their lower end, on the support of the guide and fastening element which is formed by part of their legs.

Said straps can be rigid of a single structure or house a length variation system.

After the assembly of all the straps, which remain preferably oriented upwards with respect to the second framework, the first framework of tapes is then mounted on the upper ends of said straps, coupling the supports of the guide and fastening elements of the first framework on these upper ends of the straps.

Once the straps have been fixed to the networks, each one of the tapes will then be tightened by their ends by corresponding upper joining elements, adjusting the tension of the tapes to the tension required for the obtainment of the necessary working surface. The possibility has been provided of incorporating in the inserts of the mould said sensors situated in correspondence and preferably below the pins, which will allow measuring the tension/position corresponding to the lower end of the strap, with the aim of providing the measurement that must serve to guarantee that force from the network is not transmitted to the mould (with the exception of that exerted by gravity).

Once the tapes have been tightened, it is possible to obtain the network finally mounted and adapted to the deployable structure and with a required working surface configuration.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a perspective view of the mould.
Figure 2.- Shows a perspective view wherein the assembly is observed of the tapes of the first framework of tapes on the mould.
Figure 3.- Shows a detailed view of the anchoring element fastening the tape on the mould.
Figure 4.- Shows a detailed view of the insert of the mould.
Figure 5.- Shows a detailed view of the guide and fastening element positioned in an intersection point between tapes.
Figure 6.- Shows a sectional view of the insert wherein the assembly is observed of the guide and fastening element on the insert.
Figure 7.- Shows the guide and fastening element of figure 5 folded with part of the legs crimping the tapes and another part of the legs oriented upwards defining a support wherein the straps will be coupled.
Figure 8.- Shows a detail of the guide and fastening element positioned in an intersection point between tapes, close to the anchoring system to the mould.
Figure 9.- Shows a perspective view wherein the second framework of tapes is observed mounted on the mould and the structure also connected to the mould.
Figure 10.- Shows a detail of a strut of the structure connected to the mould wherein a lower node and a lower joining element screwed to the lower node is observed.
Figure 11.- Shows the elements of the previous figure, and complementarily an articulation of the structure, wherein the lower joining element is observed gripping one end of a tape.
Figure 12.- Shows a detail of how one end of the strap couples to the support of the guide and fastening element.
Figure 13.- Shows a perspective view of the situation wherein all the straps have been mounted on the second framework.
Figure 14.- Shows a perspective view wherein the phase after that of the previous figure is observed, wherein the first framework of tapes has been mounted coupling it to the upper ends of the straps.
Figure 15.- Shows a detailed view wherein the upper joining element is observed mounted on an upper node of the structure, wherein one of the tapes appears tightened on the first framework of tapes.
Figure 16.- Shows a schematic view of part of the elements forming the network and structure in the final assembly situation of the network on the structure.

### PREFERRED EMBODIMENT OF THE INVENTION

In light of the figures, a preferred embodiment is described below of the combination of a deployable structural network and a deployable structure which forms the object of this invention.

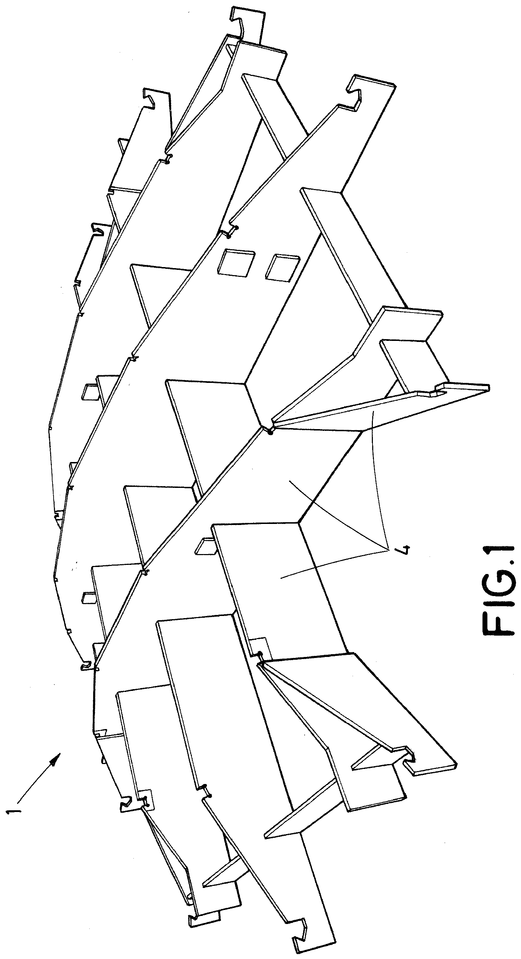

In figure 1, the mould (1) used for the obtainment of a first and second framework of tapes (2, 3), is observed, which is formed by a frame of plates (4) which are distributed parallel and perpendicular to the previous, whereto plates (4) are added in oblique disposal. The plates (4) of the mould (1) have a particular geometry of their perimeter edge that is devised in accordance with the configuration that is going to be given to the framework of tapes (2, 3).

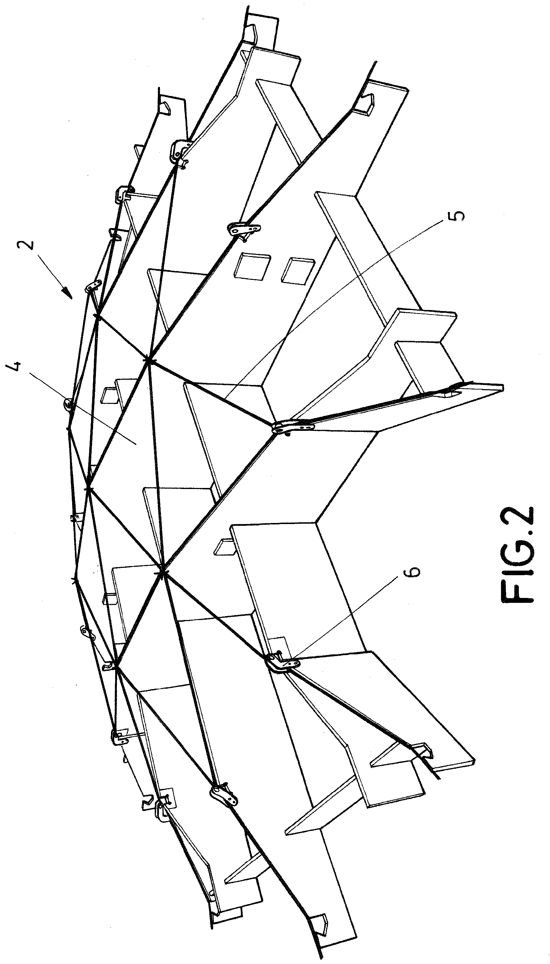

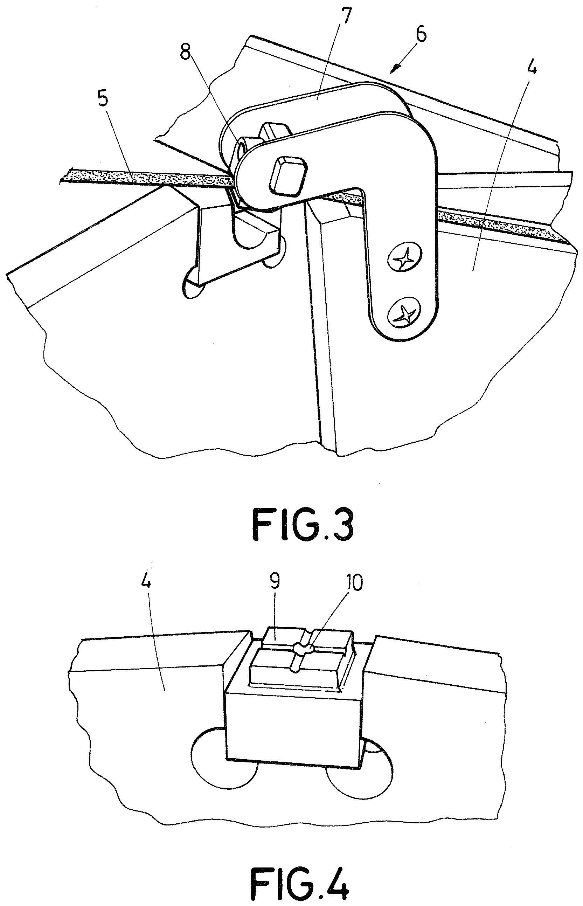

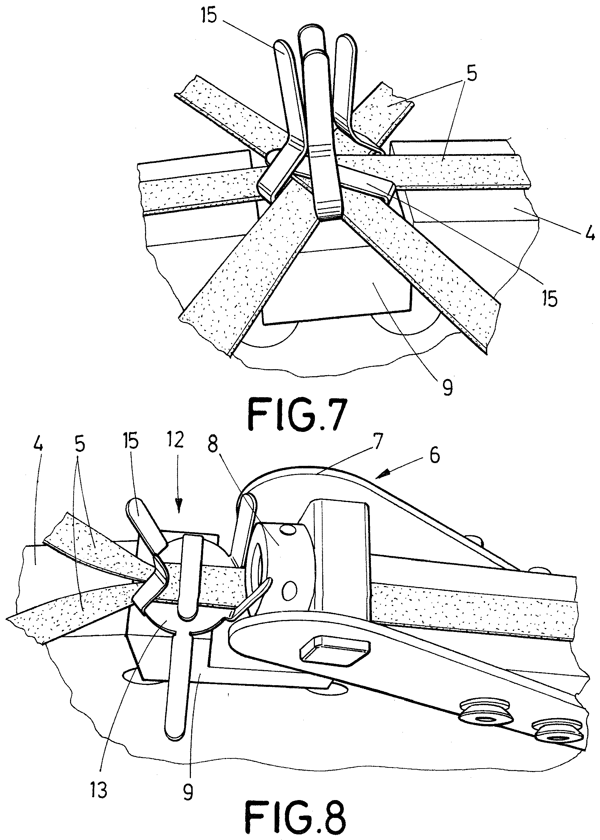

In figure 2, it is observed that the tapes (5) have been positioned on the perimeter edges of the plates (4) intercrossing at intersection points, with a relative distribution and orientation between tapes (5) which are going to configure the first framework of tapes (2), the tapes (2) being fixed to the edges of the plates (4) provisionally by anchoring elements (6), which has been represented in greater detail in figure 3 or figure 8.

Said anchoring elements (6) comprise a frame (7) connected to the plate (4) and a joining element (8) mounted on said frame (7) which is designed to anchor and fix the position of the tape (5).

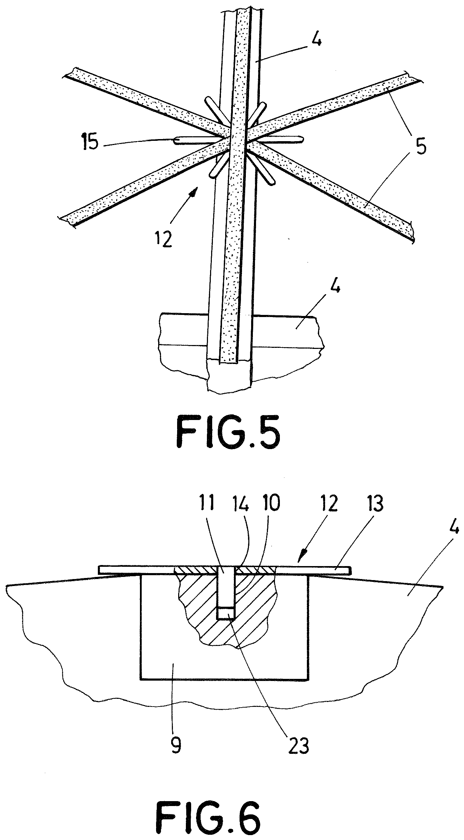

In figure 4, it is also observed that the mould (1) integrates inserts (9) on the edges of the plates (4), located in positions which are going to correspond to the intersection points between the tapes (5). The inserts (9) incorporate a housing (10) which houses a pin (11), as shown in figure 6, which would fix the position of guide and fastening elements (12), represented in figure 5, designed to join the tapes (5) in their intersection points.

The guide and fastening elements (12) comprise a core (13) wherefrom radially emerge several folding legs (15), where the core (13) has a through bore (14) designed for the introduction of the pin (11).

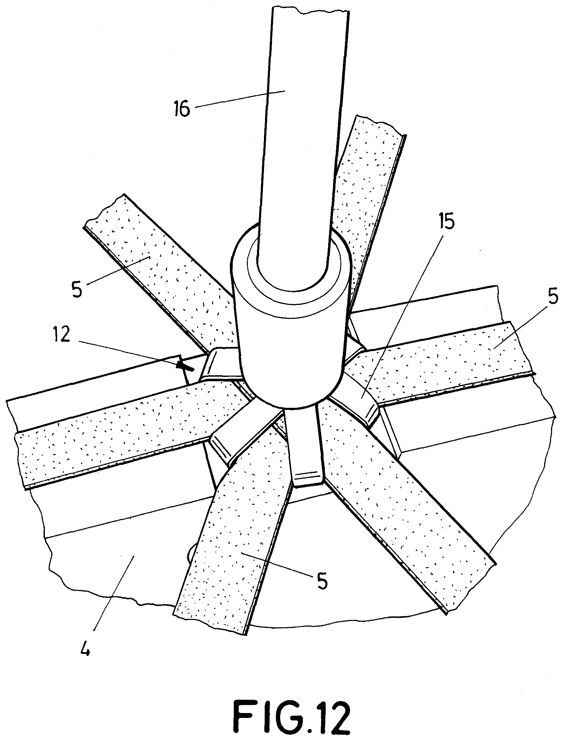

In figure 7, the situation has been represented wherein part of the legs (15) have been folded crimping the tapes (5) in their intersection points and the rest of the legs (15) have been folded oriented upwards to form a support designed to receive a strap (16), as shall be seen in figure 12. In figure 8, it shows the folding process of the legs (15) in an intersection point between tapes (5), close to the anchoring element (6).

Having established the joint between the tapes (5) in their intersection points by these guide and fastening elements (12), a relative position and distribution of the tapes (5) would be configured, thus forming the first framework of tapes (2).

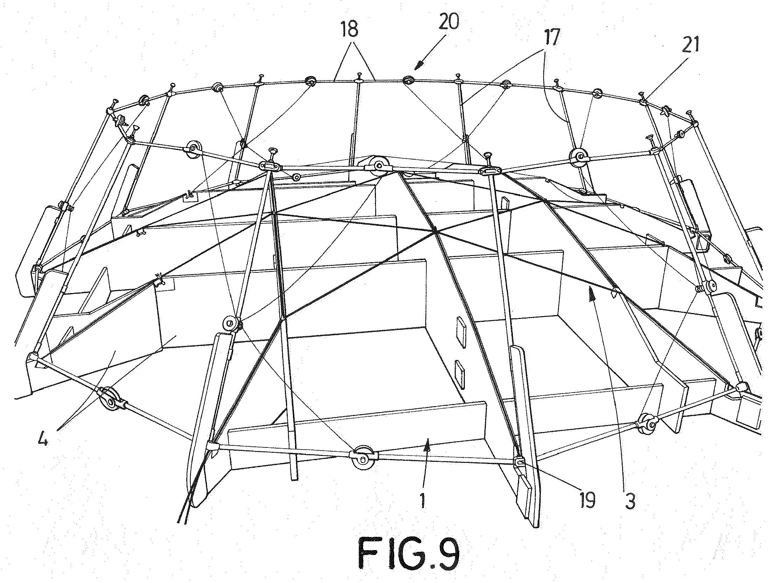

In figure 9, a second framework of tapes (3) appears on the mould (1) formed in a similar way to the first framework of tapes (2). It also shows the deployable structure (20), which has been mounted on the mould (1), comprising struts (17) which are interconnected by their upper and lower ends by articulated arms (18), and lower and upper nodes (19, 21) defined in the joint between struts (17) and articulated arms (18).

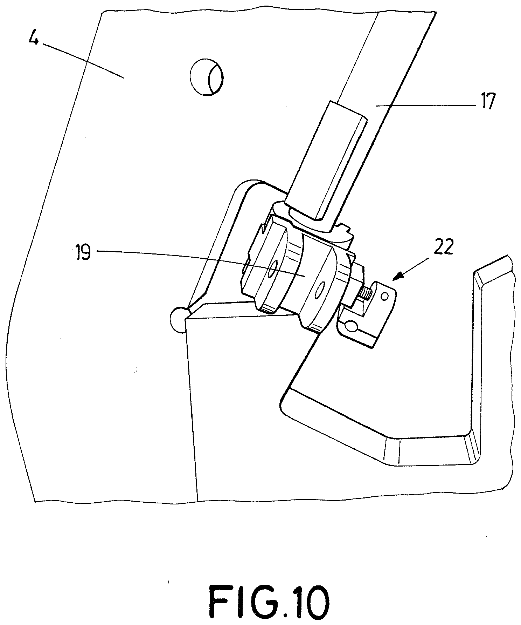

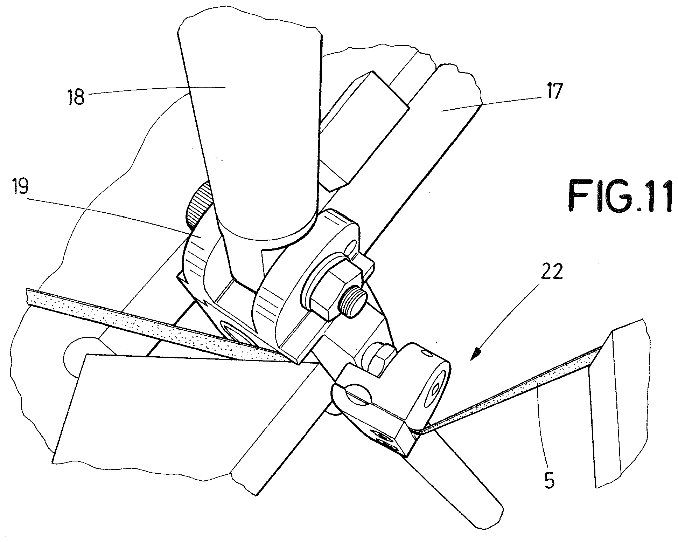

The base of the strut (17) is connected to the mould (1) in figure 10, then showing in figure 11 lower joining elements (22) which fix the position of the tapes (5) of the second framework of tapes (3) on the lower nodes (19) of the deployable structure (20).

Next figure 12 shows the following phase wherein the straps (16) are coupled by one of their ends on the support of the guide and fastening elements (12) which are found in the intersection points of the tapes (5).

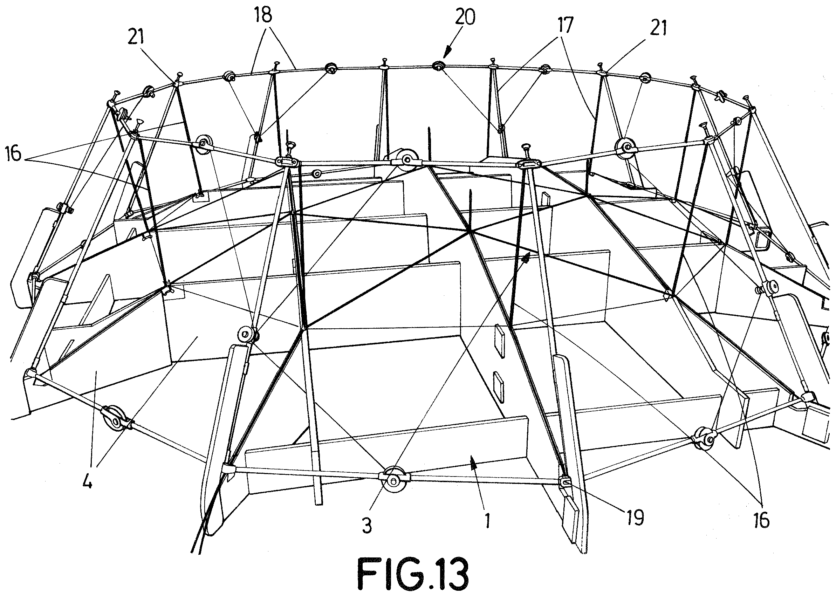

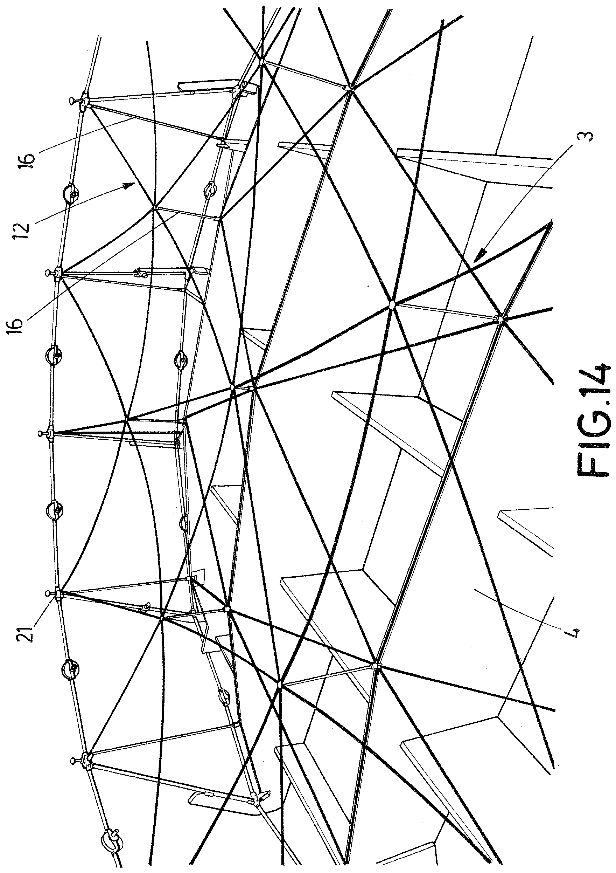

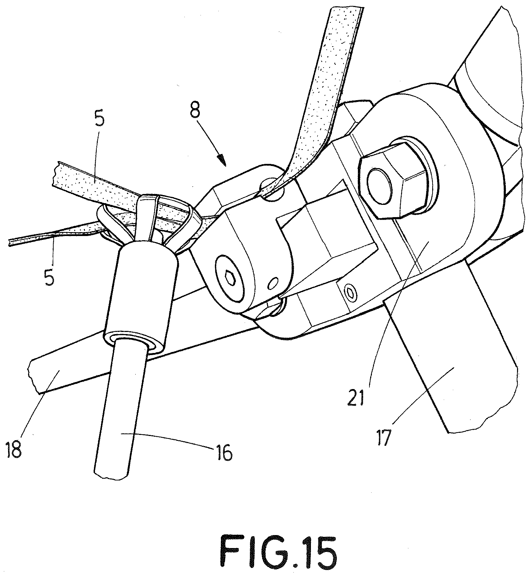

In figure 13, all the straps (16) are shown positioned on the second framework of tapes (3) and oriented upwards, and figure 14 shows the rear assembly of the first framework of tapes (2), where it is observed that the other ends of the straps (16) are coupled on the supports of the guide and fastening elements (12) of the first framework of tapes (2), and the position of the tapes (5) of the first framework of tapes (2) is fixed on the upper nodes (21) of the deployable structure (20) by upper joining elements (8), as observed in figure 15.

In the situation represented in figure 14, it is observed that each one of the tapes (5) is tightened by the upper joining elements (8), adjusting the tension of the tape (5) to the tension required for the obtainment of the necessary working surface.

In figure 6, it is observed that the inserts (9) of the mould (1) integrate sensors (23) situated in correspondence and underneath the pins (11) designed to measure the tension corresponding to the lower end of the strap (16) to control the tension/position during the phase described in the previous paragraph.

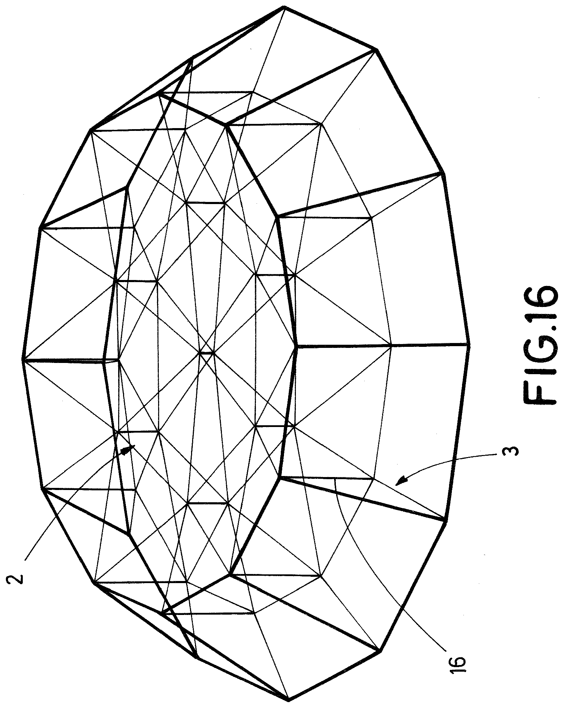

In figure 16, the first and second framework (2, 3) and their rods (16) are schematically observed in the final assembly position on the deployable structure (20), in where only the struts (17) and the articulated arms (18) have been represented.

## Claims

1. Combination of a deployable structural network and a deployable structure (20) formed by struts (17) which are interconnected at their upper and lower ends by articulated arms (18) at lower nodes (19) and upper nodes (21) defined by the joints between the struts (17) and the articulated arms (18), the deployable structural network comprising:
- a first framework of tapes (2) formed by interwoven tapes (5) and by guide and fastening elements (12) which, on the one hand, grip the tapes (5) in their intersection points and, on the other, define supports,
- a second framework of tapes (3) formed by interwoven tapes (5) and by guide and fastening elements (12) which, on the one hand, join the tapes (5) in their intersection points and, on the other, define supports,
- straps (16) which couple by one end with the supports of the guide and fastening elements (12) which grip the tapes (5) of the first framework of tapes (2) and which couple by their other end with the supports of the guide and fastening elements (12) which grip the tapes (5) of the second framework of tapes (3),
- lower joining elements (22) which are designed to connect the tapes (5) of the second framework of tapes (3) to the lower nodes (19) of the deployable structure (20), and
- upper joining elements (8) which are designed to connect the tapes (5) of the first framework of tapes (2) to the upper nodes (21) of the deployable structure (20),
wherein the first and second framework of tapes (2, 3) face one another in different planes and are not interwoven, each having an essentially paraboloid configuration with a central vertex, wherein the first framework of tapes (2) has an orientation facing the second framework of tapes (3) and wherein their central vertices constitute the closest points between the first and the second framework of tapes (2, 3),
**characterized in that** the tapes (5) are of carbon fibre material at least partially impregnated with flexible epoxy resin.

2. Combination according to claim 1, wherein the tapes (5) are additionally composed of a lubricating film on their surface.

3. Combination according to claim 1, wherein the guide and fastening elements (12) comprise a core (13) wherefrom radially emerge several folding legs (15), wherein part of the legs (15) are designed to be folded crimping the tapes (5) in their intersection points and another part are designed to be folded to form a support designed to receive the straps (16).

4. Combination according to claim 3, wherein the core (13) of the guide and fastening elements (12) has a through bore (14).

## Patentansprüche

1. Kombination eines entfaltbaren strukturellen Netzes und einer entfaltbaren Struktur (20), die durch Streben (17) gebildet wird, die an ihrem oberen und unteren Ende durch Gelenkarme (18) an unteren Knoten (19) und oberen Knoten (21) miteinander verbunden sind, die durch die Verbindungen zwischen den Streben (17) und die Gelenkarme (18) definiert sind,
wobei das entfaltbare strukturelle Netz Folgendes umfasst:
- ein erstes Bändergerüst (2), das durch verwobene Bänder (5) und durch Führungs- und Befestigungselemente (12) gebildet wird, die einerseits die Bänder (5) an ihren Überschneidungspunkten fassen und andererseits Stützen definieren,
- ein zweites Bändergerüst (3), das durch verwobene Bänder (5) und durch Führungs- und Befestigungselemente (12) gebildet wird, die einerseits die Bänder (5) an ihren Überschneidungspunkten verbinden und andererseits Stützen definieren,
- Streifen (16), die mit einem Ende an die Stützen der Führungs- und Befestigungselemente (12) gekoppelt werden, die die Bänder (5) des ersten Bändergerüsts (2) fassen, und die mit ihrem anderen Ende an die Stützen der Führungs- und Befestigungselemente (12) gekoppelt werden, die die Bänder (5) des zweiten Bändergerüsts (3) fassen,
- untere Verbindungselemente (22), die darauf ausgelegt sind, die Bänder (5) des zweiten Bändergerüsts (3) mit den unteren Knoten (19) der entfaltbaren Struktur (20) zu verknüpfen, und
- obere Verbindungselemente (8), die darauf ausgelegt sind, die Bänder (5) des ersten Bändergerüsts (2) mit den oberen Knoten (21) der entfaltbaren Struktur (20) zu verknüpfen,
wobei das erste und zweite Bändergerüst (2, 3) einander in unterschiedlichen Ebenen zugewandt sind und nicht verwoben sind, wobei sie jeweils eine im Wesentlichen paraboloide Konfiguration mit einem zentralen Scheitelpunkt aufweisen,
wobei das erste Bändergerüst (2) eine dem zweiten Bändergerüst (3) zugewandte Ausrichtung aufweist und wobei ihre zentralen Scheitelpunkte den nächsten Punkt zwischen dem ersten und dem zweiten Bändergerüst (2, 3) darstellen,
**dadurch gekennzeichnet, dass** die Bänder (5) aus Kohlenstofffaserwerkstoff sind, der mindestens teilweise mit flexiblem Epoxidharz imprägniert ist.

2. Kombination nach Anspruch 1, wobei die Bänder (5) auf ihrer Oberfläche zusätzlich aus einem Schmierfilm bestehen.

3. Kombination nach Anspruch 1, wobei die Führungs- und Befestigungselemente (12) einen Kern (13) umfassen, von dem aus mehrere faltbare Schenkel (15) ausgehen, wobei ein Teil der Schenkel (15) darauf ausgelegt ist, so gefaltet zu werden, dass die Bänder (5) an ihren Überschneidungspunkten in Falten gelegt werden, und ein anderer Teil darauf ausgelegt ist, so gefaltet zu werden, dass sie eine Stütze bilden, die darauf ausgelegt ist, die Streifen (16) aufzunehmen.

4. Kombination nach Anspruch 3, wobei der Kern (13) der Führungs- und Befestigungselemente (12) eine durchgehende Öffnung (14) aufweist.

## Revendications

1. Combinaison d'un réseau structurel dépliant et d'une structure dépliante (20) formée par des entretoises (17) qui sont interconnectées à leurs extrémité supérieure et inférieure par des bras articulés (18) aux noeuds inférieurs (19) et aux noeuds supérieurs (21) définis par les joints entre les entretoises (17) et les bras articulés (18), le réseau structurel dépliant comprenant :
- une première armature de rubans (2) formée par des rubans entrecroisés (5) et par des éléments de guidage et de serrage (12) qui, d'une part, accrochent les rubans (5) dans leurs points d'intersection et, d'autre part, définissent des supports,
- une deuxième armature de rubans (3) formée par des rubans entrecroisés (5) et par des éléments de guidage et de serrage (12) qui, d'une part, relient les rubans (5) dans leurs points d'intersection et, d'autre part, définissent des supports,
- des sangles (16) qui sont couplées à une extrémité aux supports des éléments de guidage et de serrage (12) qui accrochent les rubans (5) de la première armature de rubans (2) et qui sont couplées à leur autre extrémité aux supports des éléments de guidage et de serrage (12) qui accrochent les rubans (5) de la deuxième armature de rubans (3),
- des éléments de liaison inférieurs (22) qui sont conçus pour raccorder les rubans (5) de la deuxième armature de rubans (3) aux noeuds inférieurs (19) de la structure dépliante (20), et
- des éléments de liaison supérieurs (8) qui sont conçus pour raccorder les rubans (5) de la première armature de rubans (2) aux noeuds supérieurs (21) de la structure dépliante (20),
dans laquelle la première et deuxième armature de rubans (2, 3) sont en regard l'une de l'autre sur différents plans et ne sont pas entrecroisées, chacune ayant
une configuration essentiellement paraboloïde avec un sommet central, dans laquelle la première armature de rubans (2) a une orientation en regard de
la deuxième armature de rubans (3) et dans laquelle leurs sommets centraux constituent les points les plus proches entre la première et la deuxième armature de rubans (2, 3), **caractérisée en ce que** les rubans (5) sont en matériau de fibre de carbone au moins partiellement imprégnés de résine époxy souple.

2. Combinaison selon la revendication 1, dans laquelle les rubans (5) sont composés en outre d'un film lubrifiant sur leur surface.

3. Combinaison selon la revendication 1, dans laquelle les éléments de guidage et de serrage (12) comprennent un noyau (13) d'où émergent radialement plusieurs pieds pliants (15), dans laquelle une partie des pieds (15) sont conçus pour être pliés sertissant les rubans (5) dans leurs points d'intersection et une autre partie sont conçus pour être pliés pour former un support conçu pour recevoir les sangles (16).

4. Combinaison selon la revendication 3, dans laquelle le noyau (13) des éléments de guidage et de serrage (12) a un orifice traversant (14).
